# EUROPÄISCHE PATENTANMELDUNG

(11) **EP 1 452 746 A1**
(43) Veröffentlichungstag der Anmeldung: **01.09.2004**
(21) Anmeldenummer: 04100793.1
(22) Anmeldetag: 01.03.2004
(51) Int. Cl.: F16B 7/04, F16L 3/24

(54) **Halteelement**

(30) Priorität: 01.03.2003 DE 10309013
(71) Anmelder: HILTI Aktiengesellschaft, 9494 Schaan (LI)
(72) Erfinder: Herb, Armin, 86974 Apfeldorf (DE); Steingruber, Adrian, 86836 Graben (DE)
(74) Vertreter: Wildi, Roland

(57) **Zusammenfassung**

Ein Halteelement (1) zum Halten eines Leitungsstrang-Auflageelements an einer Montageschiene umfasst eine Grundplatte (2) zur Anlage des Halteelements (1) an der Montageschiene, einen Halteabschnitt (7) zum Halten des Auflageelements an der Montageschiene und ein, durch die Öffnung (8) in der Grundplatte (2) hindurchführbares Befestigungsmittel zur Fixierung der Grundplatte (2) des Halteelements (1) an der Montageschiene. Die Anlagefläche (3) der Grundplatte (2) weist eine Achse (6) auf. An der Grundplatte (2) sind zu der Anlagefläche der Grundplatte (2) an der Montageschiene senkrecht stehende Stege (10.1, 10.2, 11.1, 11.2) zum teilweisen Umgreifen der Montageschiene vorgesehen. Die Stege (10.1, 10.2) erstrecken sich ausgehend von der Anlagefläche (3) in einem Winkel (α) zur Achse (6) von der Anlagefläche (3), wobei der Winkel (α) grösser als 15° ist.

## Beschreibung

### Technisches Gebiet

Die Erfindung betrifft ein Halteelement zum Halten von zumindest einem Auflageelement an einem Profil, insbesondere zum Halten eines Leitungsstrang-Auflageelements an einem C-förmigen Schienenprofil. Das Halteelement umfasst eine Grundplatte zur Anlage des Halteelements an dem Profil, wobei die Anlagefläche der Grundplatte eine Achse aufweist, und wobei die Grundplatte zumindest zwei, im Wesentlichen zu der Anlagefläche der Grundplatte an dem Profil senkrecht stehende erste Stege zum teilweisen Umgreifen des Profils aufweist, und zumindest einen Halteabschnitt zum Halten des Auflageelements an dem Profil, und zumindest ein Befestigungsmittel zur Fixierung der Grundplatte des Halteelements an dem Profil. Des Weiteren betrifft die Erfindung eine Haltevorrichtung die ein Halteelement und ein Auflageelement umfasst.

### Stand der Technik

Im industriellen Leitungsstrangbau werden beispielsweise Rohrleitungen auf Rahmenkonstruktionen aus Stahl abgestützt, beziehungsweise angelegt. Die Rahmenkonstruktion wird aus Profilträgern oder Systemträgern eines Montagesystems erstellt. Damit die Rohrleitungen an den Rahmenkonstruktionen gehalten werden, sind so genannte Rohrhalter bekannt, die eine Rohrschelle zum Umfassen der Rohrleitung und ein Auflageelement, auch Rohrschuh genannt, aufweisen. Diese Rohrhalter sind an einem, zumeist dem horizontalen Träger der Rahmenkonstruktion, gegen Bewegungen des Rohrschuhs senkrecht vom Träger und Bewegungen quer zur Rohrleitungsachse befestigt. Die Rahmenkonstruktionen sind flexibel anwendbar, so dass neben dem industriellen Leitungsstrangbau auch diverse andere, im Raum angeordnete Konstruktionen auf solchen Rahmenkonstruktionen abgestützt, beziehungsweise angelegt werden. Auf die Gegenstände, wie Leitungsstränge wirken z. B. infolge Temperatureinflüssen auf den Gegenstand oder der Rahmenkonstruktion, der Art des transportierten Mediums oder der Materialeigenschaften des Gegenstandes in dessen Längserstreckung wirkende Kräfte. Die auf die Gegenstände wirkenden Kräfte müssen zur Verhinderung unnötiger Spannungen im Auflager- beziehungsweise im Anlagebereich an der Rahmenkonstruktion ausgeglichen werden.

Die Auflageplatte des an der Rahmenkonstruktion befestigten Gegenstandes wird beispielsweise mittels Z- oder L-förmigen Schweisslaschen geführt gehalten, die direkt an einem Profilträger angeschweisst sind. Nachteilig an dieser bekannten Lösung ist, dass Schweissungen nur von spezialisierten Handwerkern erstellt werden dürfen und dass diese aufwändig in der Herstellung sind. Beispielsweise muss vor der Schweissung der Oberflächenschutz des Trägers im Bereich der zu erstellenden Verbindung entfernt und anschliessend die Schweissstelle gegen Korrosion geschützt werden. In explosionsgefährdeten Bereichen dürfen ohne ein aufwändiges Genehmigungsverfahren und zusätzlichen provisorischen, baulichen Massnahmen keine Schweissungen erstellt werden. Anpassungen und Änderungen an der Leitungsstrang-Befestigung sind bei geschweissten Verbindungen nur unter einem grossen Aufwand durchführbar.

Eine andere Möglichkeit stellen Klauenelemente dar, wie sie beispielsweise in der DE 31 10 716 A1 und der DE 196 53 538 C1 gezeigt sind. Die Klauenelemente umgreifen den Rand eines Trägerflansches und halten mit einem nasenartig ausgebildeten Vorsprung die Auflageplatte an dem Profilträger. Nachteilig an dieser Art von Rohrhalterungen ist deren aufwändige Herstellung sowie die Vielzahl von Einzelteilen aus denen diese Halterungen bestehen. Des Weiteren können die Klauenelemente nur bei Tragprofilen angeordnet werden, die einen freien Rand ausgebildet haben.

In der WO 01/33128 A1 ist eine andere Art der Rohrhalterung gezeigt, bei der eine Basisplatte auf eine C-förmige Schiene aufgelegt wird, wobei die Basisplatte in Längserstreckung des Profils Abkantungen aufweist, die das Profil teilweise umgreifen. Eine Rohrschelle ist mit einem Befestigungsmittel versehen. Die Rohrschelle wird durch eine Öffnung in der Basisplatte, nach deren Positionierung an der Schiene, eingeführt und durch eine Drehung der Rohrschelle um etwa 90° erfolgt die Verspannung der Rohrhalterung an der Schiene.

Nachteilig an der bekannten Lösung ist, dass die, aufgrund der in Längsrichtung der Rohrleitung wirkenden Kräfte, resultierenden Verschiebungen nicht im Anlagebereich der Rohrschelle an der Basisplatte ausgeglichen werden können. Es entstehen in der, mit der Rohrschelle fixierten Rohrleitungen unerwünschte Spannungen. Zudem wirken auf das Tragprofil senkrecht zu dessen Längserstreckung hohe Torsionskräfte, die von dünnwandigen Hohlprofilen oder C-förmigen Montageschienen nur bedingt aufgenommen werden können. Spannelemente, wie sie bei Stahlträgern verwendet werden, lassen sich nur bedingt auf dünnwandigen Hohlprofilen, beziehungsweise nicht an C-förmigen Montageschienen montieren.

### Darstellung der Erfindung

Der vorliegenden Erfindung liegt die Aufgabe zugrunde, ein Halteelement zum Halten eines Auflageelements zu schaffen, dass an verschiedenen Arten von Profilen und insbesondere an Profilen mit einer geringen Torsionssteifigkeit anwendbar ist. Dabei soll dass Halteelement einfach anwendbar und wirtschaftlich herstellbar sein.

Die Aufgabe ist durch die Merkmale des Anspruchs 1 gelöst. Gemäss der Erfindung umfasst ein Halteelement zum Halten von zumindest einem Auflageelements an einem Profil, insbesondere zum Halten eines Leitungsstrang-Auflageelements an einem C-förmigen Schienenprofil, eine Grundplatte zur Anlage des Halteelements an dem Profil, zumindest einen Halteabschnitt zum Halten des Auflageelements an dem Profil, und zumindest ein Befestigungsmittel zur Fixierung der Grundplatte des Halteelements an dem Profil. Die Anlagefläche der Grundplatte weist eine Achse auf, entlang derer die Anlagefläche an dem Profil anlegbar ist. Die Grundplatte weist zumindest zwei, im Wesentlichen zu der Anlagefläche der Grundplatte an dem Profil senkrecht stehende erste Stege zum teilweisen Umgreifen des Profils auf. Die ersten Stege erstrecken sich ausgehend von der Anlagefläche in einem Winkel (α) zur Achse, wobei der Winkel (α) grösser als 15° ist.

Zur Halterung des Auflageelements werden beispielsweise zwei, gegeneinander ausgerichtete, erfindungsgemässe Halteelemente an dem Profil angeordnet. Die ersten Stege leiten die, im Wesentlichen senkrecht zur Längserstreckung des Profils auf das Profil wirkenden Kräfte seitlich in das Profil ein. Die freien, im angeordneten Zustand des Halteelements dem Profil zugewandten Ränder der ersten Stege stützen das Profil dabei seitlich ab. Diese Eigenschaft des erfindungsgemässen Halteelements wirkt sich insbeso ndere bei Profilen mit einer geringen oder keinen Torsionssteifigkeit, wie beispielsweise bei dünnwandigen Hohlprofilen oder C-förmigen Montageschiene n, positiv auf deren Gebrauchstauglichkeit und Tragfähigkeit aus. Gerade C-förmige Montageschienen weisen infolge ihrer, in Längsrichtung verlaufenden Montageöffnung nur eine geringe Torsionssteifigkeit auf. Da die ersten Stege des Halteelements die C-förmigen Montageschiene im Bereich der Montageöffnung umgreift, ist im Krafteinleitungsbereich der Lagerung des Auflageelements ein geschlossenes Hohlprofil vorhanden, das eine wesentlich höhere Torsionssteifigkeit als die eigentliche C-förmige Montageschiene aufweist.

Das Auflageelement wird mittels des Halteelements gegen ein Abheben vom Profil gesichert und gleichzeitig sind Verschiebungen in Richtung der Längserstreckung des Profils, beziehungsweise in Richtung der Achse der Anlagefläche begrenzt. Das Auflageelement kann sich jedoch in Richtung senkrecht zur Längserstreckung des Profils, beziehungsweise senkrecht zur Achse der Anlagefläche in der Ebene der Grundplatte verschieben, um Längenänderungen des, an dem Profil zu befestigenden Gegenstandes auszugleichen.

Das erfindungsgemässe Halteelement wird üblicherweise auf das Profil aufgelegt, d. h. bezogen auf den Boden oben auf dem Profil angeordnet. Des Weiteren kann das erfindungsgemässe Halteelement auch seitlich zur Halterung beispielsweise einer Steigleitung angeordnet werden. Auch zur Abhängung eines Gegenstandes an einem Profil kann das erfindungsgemässe Halteelement hängend an einem Profil angeordnet werden.

Das Befestigungsmittel ist beispielsweise werkseitig an der Grundplatte angeordnet. Wird das erfindungsgemässe Halteelement an einer C-förmigen Montageschiene angeordnet, weist das Befestigungsmittel bevorzugt ein Hintergreifteil auf, das im Innern der C-förmigen Montageschiene vorgesehene Haltevorsprünge durch Drehen des Befestigungsmittels hintergreifen kann.

Vorzugsweise ist der Winkel (α) gleich 90°. Die derart ausgerichteten ersten Stege gewährleisten die Krafteinleitung in die Seitenwände des Profils und bilden eine optimale Abstützung, so dass eine senkrecht auf die Längserstreckung des Profils wirkende Kraft ohne grosse Belastungen auf das Profil übernommen werden kann.

Bevorzugt sind an der Grundplatte zumindest zwei weitere Stege vorgesehen, die sich in einem Winkel **(β)** zur Achse von der Anlagefläche ausgehend erstrecken, wobei der Winkel **(β)** grösser als 5° ist. Die Grundplatte erstreckt sich vorzugsweise bis zum äusseren Ende der ersten Stege, so dass die Grundplatte eine im Wesentlichen trapezförmige Ausgestaltung aufweisen kann. Die zusätzlichen Stege sind vorzugsweise an den freien Randbereichen der Grundplatte angeordnet und dienen einerseits zur Versteifung der Grundplatte und andererseits als Führungselemente für das Halteelement am Profil.

Bevorzugt weist die Grundplatte zumindest eine Öffnung zum Durchführen des zumindest einen Befestigungselement auf, wobei mittels des Befestigungselements die Grundplatte an dem Profil fixierbar ist. Nach der Positionierung des Halteelements am Profil kann mittels des Befestigungselements das Halteelement in der gewünschten Ausrichtung fixiert werden. Als Befestigungsmittel kann beispielsweise eine so genannte Schienenmutter verwendet werden, wie sie zur Fixierung von Gegenständen an Montageschienen bekannt ist. Ist die Schienenmutter federbeaufschlagt, so kann das Halteelement in einem ersten Arbeitsgang an der Montageschiene temporär gehalten und mittels Druck auf die Schienenmutter entlang der Montageöffnung im Profil verschoben werden, bis die gewünschte Position erreicht ist. Durch Verspannen der Schienenmutter wird das Halteelement lösbar fixiert. Mit dieser Ausgestaltung der Grundplatte ist eine korrekte Ausrichtung des erfindungsgemässen Halteelements an dem Profil auch bei einer Grundplattenausführung gewährleistet, die nur erste Stege aufweist, da der hintere Bereich mittels dem durch die Öffnung hindurchgeführten und fixierten Befestigungselements ausgerichtet ist.

Vorzugsweise ist ein Gleitelement im Auflagebereich des Auflageelements an der Grundplatte angeordnet. Damit lassen sich die Reibungskräfte zwischen dem Auflageelement und der Grundplatte reduzieren. Mögliche Gleitelemente sind beispielsweise aus Kunststoff oder Teflon gefertigt.

Vorteilhafterweise ist das Halteelement aus einem Blech im Stanz-/Biegeverfahren gefertigt. Da das Halteelement aus einem flächigen Werkstück gefertigt werden kann, bietet sich die Fertigung aus Blech an. Somit kann mit einfachen Mitteln das Halteelement in grossen Stückzahlen gefertigt werden, was ein wirtschaftliches Herstellen bei geringen Kosten ermöglicht. Des Weiteren kann das Halteelement aus mehreren Einzelstücken (z. B. Grundplatte und einzelnen Stegen) durch Schweissen oder Löten zusammengesetzt werden. Eine Alternative zu diesen Fertigungsvarianten stellt die Verwendung eines geeigneten Kunststoffs, z. B. mittels Spritzgussverfahren, zur Herstellung des Halteelements dar.

Eine Variante zur Anwendung zweier Halteelemente ist eine Haltevorrichtung, die eine weitere Ausführungsform des erfindungsgemässen Halteelements und ein Auflageelement, insbesondere ein Leitungsstrang-Auflageelement umfasst. Das Halteelement weist in dieser Ausführungsform zumindest drei Halteabschnitte auf, die das Auflageelement einerseits gegen ein Abheben von dem Profil und andererseits gegen eine Verschiebung in Längserstreckung des Profils, beziehungsweise in Richtung der Achse der Anlagefläche sichern. Zumindest einer der Halteabschnitte ist mit seiner Aufnahme entgegen der Ausrichtung der Aufnahmen der zumindest zwei weiteren Halteelemente ausgerichtet.

Das Auflageelement weist zumindest zwei Auflageabschnitte auf, die in der Ebene der Grundplatte verlaufen und von den Halteelementen an der Grundplatte umfasst werden. Deren Längserstreckung wird derart gewählt, dass sich das Auflageelement um das nötige Mass in Richtung senkrecht zur Längserstreckung verschieben und so die auf den befestigten Gegenstand wirkende Kräfte ausgleichen kann. Das Auflageelement kann mit einer Aufnahme für den zu befestigenden Gegenstand, z. B. mit einer Rohrschelle zur Aufnahme einer Rohrleitung, versehen sein. Die Aufnahme kann um eine Achse drehbar angeordnet sein, die senkrecht zur Auflagefläche am Träger durch die Befestigung der Rohrschelle an dem senkrecht zur Anlagefläche verlaufenden Abschnitt des Auflageelements verläuft. Damit kann auch eine Rohrleitung an dem Profil aufgelagert werden, die nicht senkrecht zur Längserstreckung des Profils verläuft. In einer weiteren Variante dazu weist das Auflageelement lediglich einen Anschlussbereich auf, an dem je nach Art des zu befestigenden Gegenstandes ein geeignetes Aufnahmeelement angeordnet werden kann.

Somit wird mit nur einem Halteelement das Auflageelement an dem Profil gehalten. Das Auflageelement wird bevorzugt als Einzelelement, aus einem Blech in einem Stanz/Biegeverfahren gefertigt und kann werkseitig an dem Halteelement angeordnet werden oder als Einzelelement vor Ort an dem Halteelement eingeschoben werden. Des Weiteren kann das Auflageelement aus einem geeigneten Kunststoff gefertigt sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand dreier Ausführungsbeispiele näher erläutert. Es zeigen:
- Fig. 1: Eine Draufsicht auf ein erstes Ausführungsbeispiel des erfindungsgemässen Halteelements;
- Fig. 2: eine Ansicht entlang der Linie II - II auf das in Fig. 1 dargestellte Halteelement;
- Fig. 3: einen Schnitt entlang der Linie III - III des in Fig. 1 dargestellten Halteelements mit eingesetzter Schienenmutter;
- Fig. 4: eine Draufsicht auf ein zweites Ausführungsbeispiel des erfindungsgemässen Halteelements, teilweise geschnitten;
- Fig. 5: einen Schnitt entlang der Linie V - V des in Fig. 4 dargestellten Halteelements;
- Fig. 6: eine Seitenansicht auf eine montierte Rohrhalterung mit zwei erfindungsgemässen Halteelementen; und
- Fig. 7: eine Draufsicht auf eine weitere erfindungsgemässe Haltevorrichtung.

Grundsätzlich sind in den Figuren gleiche Teile mit den gleichen Bezugszeichen versehen.

### Wege zur Ausführung der Erfindung

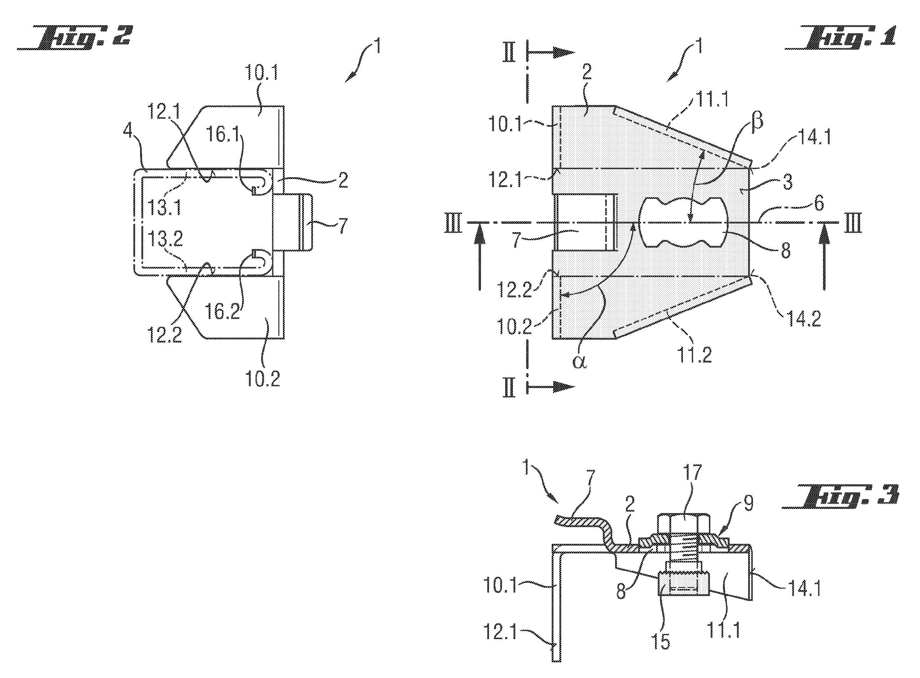

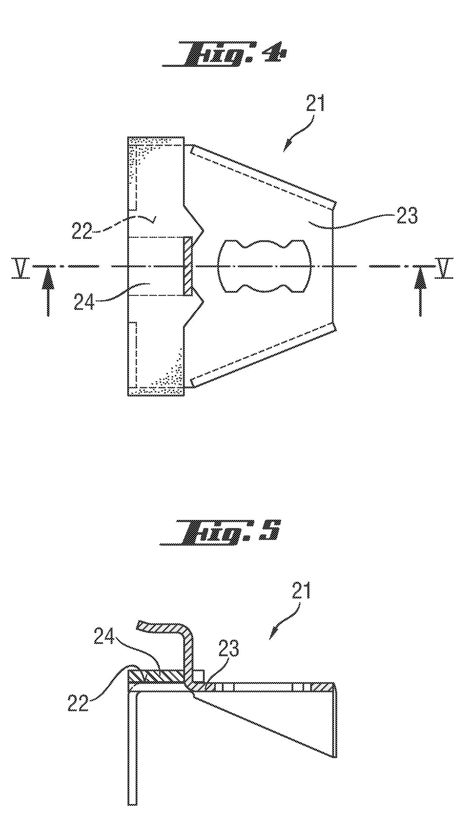

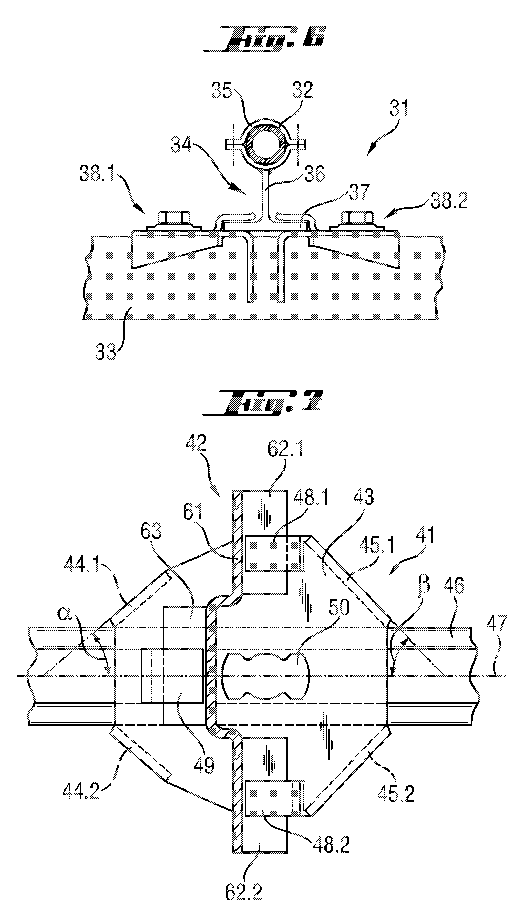

In den Fig. 1 bis Fig. 3 ist ein erstes Ausführungsbeispiel des erfindungsgemässen Halteelements dargestellt. Das Halteelement 1 umfasst eine Grundplatte 2, wobei die Grundplatte 2 im montierten Zustand mit ihrer Anlagefläche 3 an einem Profil, z. B. an einer C-förmigen Montageschiene 4 anliegt. Zur Verdeutlichung des Bereichs der Anlagefläche 3 sind deren Randbereiche mit zwei strichpun ktierten Linien in der Fig. 1 dargestellt. Die Anlagefläche 3 erstreckt sich entlang einer Achse 6, die bei einer symmetrischen Ausgestaltung der Grundplatte 2 die Mittelachse der Grundplatte 2 ist und die im montierten Zustand des Halteelements 1 parallel zu der Längsachse der C-förmigen Montageschiene 4 verläuft.

Des Weiteren ist an der Grundplatte 2 ein Halteabschnitt 7 zum Halten und teilweisen Umgreifen eines Auflageelements (hier nicht dargestellt) vorgesehen. Wird das Halteelement 1 - wie in diesem Ausführungsbeispiel - auf ein Profil aufgelegt, übernimmt der Halteabschnitt 7 die Funktion eines Niederhalteelements, das ein Abheben des Auflageelements von dem Profil weg verhindert und Bewegungen in Richtung der Achse 6 weitgehend einschränkt, jedoch Bewegungen des Auflageelements senkrecht zur Achse 6 in der Ebene der Grundplatte 2 ermöglicht. An der Grundplatte 2 ist eine Öffnung 8 zur Durchführung einer Schienenmutter 9 als Befestigungsmittel zur Fixierung des Halteelements 1 an der C-förmigen Montageschiene 4 vorgesehen.

An der Grundplatte 2 ist ein Paar von ersten Stegen 10.1 und 10.2 sowie ein Paar von zweiten Stegen 11.1 und 11.2 zum teilweisen Umgreifen der C-förmigen Montageschiene 4 ausgebildet. Die ersten Stege 10.1 und 10.2 erstrecken sich von der Anlagefläche 3 ausgehend in einem Winkel (α) von 90° zur Achse 6. Die zweiten Stege 11.1 und 11.2 erstrecken sich von der Anlagefläche 3 ausgehend in einem Winkel **(β)** von 20° zur Achse 6. Die der Anlagefläche 3 zugewandten, freien Ränder 12.1 und 12.2 der ersten Stege 10.1, bzw. 10.2 sowie die der Anlagefläche 3 zugewandten, freien Ränder 14.1 und 14.2 der zweiten Stege 11.1, bzw. 11.2 liegen im angelegten Zustand des Halteelements 1 an den Seitenwänden 13.1 und 13.2 der C-förmigen Montageschiene 4 an, wobei zur erleichterten Montage des Halteelements 1 an der C-förmigen Montageschiene 4 vorzugsweise ein gewisses Spiel zwischen dem freien Rand 12.1 des ersten Stegs 10.1 und der Seitenwand 13.1 der C-förmigen Montageschiene 4, beziehungsweise zwischen dem freien Rand 14.1 des zweiten Stegs 11.1 und der Seitenwand 13.1 der C-förmigen Montageschiene 4 vorgesehen ist. Respektive ein gewisses Spiel zwischen dem freien Rand 12.2 des ersten Stegs 10.2 und der Seitenwand 13.2 der C-förmigen Montageschiene 4, beziehungsweise zwischen dem freien Rand 14.2 des zweiten Stegs 11.2 und der Seitenwand 13.2 der C-förmigen Montageschiene 4 vorgesehen ist.

Die freien Ränder 12.1 und 12.2 der ersten Stege 10.1 und 10.2 in Kombination mit der, durch die Öffnung 8 in der Grundplatte 2 hindurchgeführten Schienenmutter 9 reichen aus um eine korrekte Ausrichtung des Halteelements 1 an der C-förmigen Montageschiene 4 sicherzustellen. Auf eine Anordnung des Paars zweiter Stege 11.1 und 11.2 kann somit ohne wesentliche Beeinträchtigung der Verwendung des Halteelements 1 verzichtet werden.

Mittels den freien Rändern 12.1 und 12.2 der ersten Stege 10.1 und 10.2 sowie den freien Rändern 14.1 und 14.2 der zweiten Stege 11.1 und 11.2 ist das Halteelement 1 nach dem Anlegen an der C-förmigen Montageschiene 4 bei einer Verschiebung des Halteelements 1 in Richtung der Längserstreckung der C-förmigen Montageschiene 4 seitlich geführt. Nach der provisorischen Positionierung des Halteelements 1 an der C-förmigen Montageschiene 4 wird die Schienenmutter 9 durch die Öffnung 8 hindurch in die C-förmigen Montageschiene 4 eingeführt und derart verdreht, dass das Hintergreifteil 15 der Schienenmutter 9 die Haltevorsprünge 16.1 und 16.2 hintergreift, womit das Halteelement 1 temporär an der C-förmigen Montageschiene 4 fixiert ist. Bevorzugt weist die Schienenmutter 9 einen federbeaufschlagten Mechanismus auf. Durch Druck auf den Schraubenkopf 17 der Schienemutter 9 kann die temporäre Fixierung des Halteelements 1 an der C-förmigen Montageschiene 4 gelöst werden und das Halteelement 1 in die gewünschte Position an der C-förmigen Montageschiene 4 gebracht werden. Beim Loslassen des Schraubenkopfs 17 rastet das Hintergreifteil 15 erneut an den Haltevorsprüngen 16.1 und 16.2 im Innern der C-förmigen Montageschiene 4 ein. Durch Verspannen des Schraubenkopfs 17 wird das Halteelement 1 an der C-förmigen Montageschiene 4 fixiert.

In den Fig. 4 und Fig. 5 ist ein zweites Ausführungsbeispiel des erfindungsgemässen Halteelements dargestellt. Das Halteelement 21 ist im Wesentlichen gleich wie das Halteelement 1 ausgebildet, das in den Fig. 1 bis Fig. 3 gezeigt ist. Im Auflagebereich 22 des Auflageelements an der Grundplatte 23 ist ein Gleitelement 24, beispielsweise aus Kunststoff oder Teflon angeordnet. Mit dem Gleitelement 24 wird die Reibung zwischen dem Auflageelement (nicht dargestellt) und dem Halteelement 21 reduziert. Mit dem Gleitelement 24 werden die senkrecht zur Längserstreckung auf das Profil wirkende Kräfte derart reduziert, dass diese Kräfte in der Kombination mit dem Halteelement 21 und der Torsionssteifigkeit des Profils von dem Profil übernommen werden können.

Eine Seitenansicht auf eine montierte Rohrhalterung mit zwei erfindungsgemässen Halteelementen 38.1 und 38.2 ist in der Fig. 6 gezeigt. Die Rohrhalterung 31 dient der Halterung der Rohrleitung 32 an dem Träger 33. Das Auflageelement 34 umfasst eine Rohrschelle 35 die auf einem, vorzugsweise in der Höhe verstellbaren Ständer 36 angeordnet ist. An dem, der Rohrschelle 33 gegenüberliegenden Ende des Ständers 36 ist zur Auflage des Auflageelements 34 auf dem Träger 33 ein Schuhelement 37 vorgesehen. Mittels der erfindungsgemässen Halteelemente 38.1 und 38.2, die gegeneinander ausgerichtet sind, wird das Auflageelement gegen ein Abheben vom Träger 33 und Verschieben in Richtung der Längserstreckung des Trägers 33 gesichert.

Fig. 7 zeigt eine Draufsicht auf eine weitere erfindungsgemässe Haltevorrichtung. Die Haltevorrichtung umfasst einerseits ein Halteelement 41 und ein Auflageelement 42, wobei zur Halterung des Auflageelements 42 nur ein Halteelement 41 angeordnet wird. Das Halteelement 41 umfasst eine Grundplatte 43, an der ein Paar erster Stege 44.1 und 44.2 sowie ein Paar zweiter Stege 45.1 und 45.2 zum teilweisen Umgreifen der C-förmigen Montageschiene 46 ausgebildet sind. Die ersten Stege 44.1 und 44.2 erstrecken sich von der Anlagefläche der Grundplatte 43 an der C-förmigen Montageschiene 46 ausgehend in einem Winkel (α) zur Achse 47 von etwa 40°. Die zweiten Stege 45.1 und 45.2 erstrecken sich von der Anlagefläche der Grundplatte 43 an der C-förmigen Montageschiene 46 ausgehend in einem Winkel zur Achse 47 **(β)** von etwa 50°.

An der Grundplatte 43 sind drei Halteabschnitte 48.1, 48.2 und 49 vorgesehen, wobei die Aufnahme des Halteabschnitts 49 entgegen der Ausrichtung der Aufnahmen der Halteabschnitte 48.1 und 48.2 ausgerichtet ist. Zur Fixierung des Halteelements 41 an der C-förmigen Montageschiene 46 ist eine Öffnung 50 in der Grundplatte 43 zum Durchführen eines Befestigungsmittels vorgesehen.

Das Auflageelement 42 umfasst einen im Wesentlichen zu der von der Grundplatte 43 gebildeten Ebene senkrecht ausgerichteten Ständer 61 und drei parallel zu der von der Grundplatte 43 gebildeten Ebene verlaufende, plattenförmige Auflagerteile 62.1, 62.2 und 63. Die Auflagerteile 62.1, 62.2 und 63 weisen eine Erstreckung in Richtung senkrecht zur Achse 47 auf, die eine Positionierung des Auflageelements 42 in Richtung dieser Erstreckung erlaubt. Das Auflageelement 42 ist an dem Halteelement 41 gegen ein Abheben weg von der C-förmigen Montageschiene 46 und in Richtung der Längserstreckung der C-förmigen Montageschiene 46, beziehungsweise in Richtung der Achse 47 gesichert.

Zusammenfassend ist festzustellen, dass ein Halteelement zum Halten eines Auflageelements geschaffen wurde, dass an verschiedenen Arten von Profilen und insbesondere an Profilen mit einer geringen Torsionssteifigkeit anwendbar ist. Dabei ist das Halteelement einfach anwendbar und wirtschaftlich.

## Patentansprüche

1. Halteelement zum Halten von zumindest einem Auflageelements (62.1, 62.2, 63) an einem Profil, insbesondere zum Halten eines Leitungsstrang-Auflageelements (37) an einem C-förmigen Schienenprofil (4; 33; 46), umfassend eine Grundplatte (2; 23; 43) zur Anlage des Halteelements (1; 21; 38.1, 38.2; 41) an dem Profil, wobei die Anlagefläche (3) der Grundplatte (2; 23; 43) eine Achse (6; 47) aufweist, und wobei die Grundplatte zumindest zwei, im Wesentlichen zu der Anlagefläche der Grundplatte (2; 23; 43) an dem Profil senkrecht stehende, erste Stege (10.1, 10.2; 44.1, 44.2) zum teilweisen Umgreifen des Profils aufweist, und zumindest einen Halteabschnitt (7; 48.1, 48.2, 49) zum Halten des Auflageelements (37; 62.1, 62.2, 63) an dem Profil, und zumindest ein Befestigungsmittel (9) zur Fixierung der Grundplatte (2; 23; 43) des Halteelements(1; 21; 38.1, 38.2; 41) an dem Profil, **dadurch gekennzeichnet, dass** die ersten Stege (10.1, 10.2; 44.1, 44.2) sich ausgehend von der Anlagefläche (3) in einem Winkel (α) zur Achse (6; 47) erstrecken, wobei der Winkel (α) grösser als 15° ist.

2. Halteelement nach Anspruch 1, **dadurch gekennzeichnet, dass** der Winkel (α) gleich 90° ist.

3. Halteelement nach Anspruch 1 oder 2, **dadurch gekennzeichnet, dass** an der Grundplatte (2; 23; 43) zumindest zwei weitere Stege (11.1, 11.2; 45.1, 45.2) vorgesehen sind, die sich ausgehend von der Anlagefläche (3) in einem Winkel **(β)** zur Achse (6; 47) erstrecken, wobei der Winkel **(β)** grösser als 5° ist.

4. Halteelement nach einem der Ansprüche 1 bis 3, **dadurch gekennzeichnet, dass** die Grundplatte (2; 23; 43) zumindest eine Öffnung (8; 50) zum Durchführen zumindest eines Befestigungselements (9) aufweist, wobei mittels des Befestigungselement s (9) die Grundplatte (2; 23; 43) an dem Profil fixierbar ist.

5. Halteelement nach einem der Ansprüche 1 bis 4, **dadurch gekennzeichnet, dass** ein Gleitelement (24) im Auflagebereich (22) des Auflageelements an der Grundplatte (23) angeordnet ist.

6. Halteelement nach einem der Ansprüche 1 bis 5, **dadurch gekennzeichnet, dass** das Halteelement (1; 21; 38.1, 38.2; 41) aus einem Blech im Stanz-/Biegeverfahren gefertigt ist.

7. Haltevorrichtung umfassend ein Halteelement (41) nach einem der Ansprüche 1 bis 6 und einem Auflageelement, insbesondere einem Leitungsstrang-Auflageelement (42).
